# DEMANDE DE BREVET EUROPEEN

(11) **EP 3 546 141 A1**
(43) Date de publication de la demande: **02.10.2019**
(21) Numéro de dépôt: 19163942.6
(22) Date de dépôt: 20.03.2019
(51) Int. Cl.: B25J 15/00, B25J 15/02, B25J 15/10, B25B 1/24

(54) **DISPOSITIF À CÂBLES POUR L'APPLICATION D'EFFORTS ÉGAUX EN AU MOINS DEUX POINTS ÉCARTÉS L'UN DE L'AUTRE**

(30) Priorité: 29.03.2018 FR 1852755
(71) Demandeur: Commissariat à l'Energie Atomique et aux Energies Alternatives, 75015 Paris (FR)
(72) Inventeur: RIWAN, Alain, 94550 Chevilly-Larue (FR)
(74) Mandataire: Lavialle, Bruno François Stéphane

(57) **Abrégé**

Dispositif d'application d'effort sur une surface, comprenant une structure et au moins deux coulisseaux qui ont chacun une extrémité d'appui sur la surface et qui sont montés sur la structure pour coulisser entre deux positions extrêmes. Le dispositif comprend au moins un premier câble ayant, entre une première extrémité et une deuxième extrémité liées à la structure : des premières portions en appui sur les coulisseaux ; des deuxièmes portions en appui contre des parties solidaires de la structure ; entre chaque première portion et la deuxième portion adjacente, un brin s'étendant parallèlement à la direction de coulissement du coulisseau correspondant de telle manière que le premier câble exerce sur les coulisseaux des efforts identiques quelle que soit la position des coulisseaux entre leur deux positions extrêmes.

## Description

La présente invention concerne l'application d'efforts égaux sur une surface en au moins deux points écartés l'un de l'autre. L'invention a pour objet un dispositif à câbles pour l'application de tels efforts. L'application de tels efforts est intéressante dans divers domaines d'activité, et par exemple dans le domaine médical pour des appareils de kinésithérapie et dans le domaine de la manipulation d'objets pour des pinces.

### ETAT DE LA TECHNIQUE

Il existe de nombreux dispositifs permettant d'appliquer des efforts en un point d'une surface. Ces dispositifs utilisent un organe d'effort par exemple un vérin, hydraulique ou pneumatique, ou un actionneur électromécanique déplaçant un élément d'appui contre ladite surface. De nombreux dispositifs de serrage et de pince sont construits ainsi.

Sur le principe, l'application d'effort sur plusieurs points d'une même surface ne pose pas particulièrement de problèmes car il suffit de prévoir autant d'éléments d'appui que de points d'application de l'effort. Cependant, cela se complique grandement quand l'effort à exercer doit être exactement le même dans tous les points d'application et que les points d'application ne sont pas tous à la même distance du dispositif, ladite distance étant mesurée parallèlement à la direction d'application de l'effort.

Il est connu du document SU-A-770787 une pince comportant une structure fixe à laquelle sont articulés par pivotement des mors pourvus chacun d'une pluralité de doigts qui ont chacun une extrémité d'appui sur la pièce à saisir et qui sont montés sur le mors concerné pour coulisser entre deux positions extrêmes. Chaque mors est en outre pourvu d'un câble ayant, entre une première extrémité et une deuxième extrémité fixées au mors, des premières portions en appui sur les coulisseaux et des deuxièmes portions en appui contre des parties solidaires de la structure pour que les doigts soient mobiles indépendamment les uns des autres en maintenant le câble sous tension. Les premières portions sont reliées aux deuxièmes portions par des troisièmes portions obliques par rapport à la direction de coulissement des coulisseaux. Une telle pince permet de saisir des pièces de section circulaire avec une mise en contact de tous les doigts sur la surface externe de la pièce.

Un inconvénient d'une telle pince est que les doigts sont plus ou moins enfoncés les uns par rapport aux autres et exercent des efforts différents sur la surface externe de la pièce.

### OBJET DE L'INVENTION

Un but de l'invention est de fournir un moyen simple et fiable pour appliquer un même effort en plusieurs points d'une même surface.

### BREF EXPOSE DE L'INVENTION

A cet effet, on prévoit, un dispositif d'application d'effort sur une surface, comprenant une structure et au moins deux coulisseaux qui ont chacun une extrémité d'appui sur la surface et qui sont montés sur la structure pour coulisser entre deux positions extrêmes. Le dispositif comprend au moins un premier câble ayant, entre une première extrémité et une deuxième extrémité liées à la structure :
- des premières portions en appui sur les coulisseaux,
- des deuxièmes portions en appui contre des parties solidaires de la structure.

Selon l'invention, ledit au moins un premier câble a, entre chaque première portion et la deuxième portion adjacente, un brin s'étendant parallèlement à la direction de coulissement du coulisseau correspondant de telle manière que le premier câble exerce sur les coulisseaux des efforts identiques quelle que soit la position des coulisseaux entre leur deux positions extrêmes, quand les coulisseaux sont immobilisés par un contact avec la surface.

Comme les brins reliant les premières portions de câble aux deuxièmes portions de câble sont parrallèles à la direction de coulissement, l'effort exercé sur les coulisseaux est directement proportionnel à la tension du câble, et plus particulièrement à la tension du ou des brins reliant la première portion en appui contre le coulisseau à la deuxième portion en appui contre la structure et ce quelle que soit l'inclinaison relative des coulisseaux ou l'enfoncement relatif des coulisseaux. Le dispositif a alors une configuration simple garantissant qu'un même effort sera exercé sur les deux coulisseaux et aux deux points de la surface avec lesquels les extrémités d'appui des coulisseaux sont destinées à venir en contact. Le dispositif garantit que, même si la surface est irrégulière ou non plane ou que le dispositif est appliqué de biais contre la surface, les efforts exercés sur la surface par les coulisseaux seront identiques l'un à l'autre.

Avantageusement, l'une des deuxièmes portions est formée par la première extrémité du câble qui est fixée à la structure.

Ceci a le mérite de la simplicité.

Selon un premier agencement, deux des deuxièmes portions sont formées par la première extrémité du câble et la deuxième extrémité du câble qui sont fixées à la structure.

Le dispositif ne comporte aucun actionneur et est complètement passif. Ceci est particulièrement intéressant pour des dispositifs lors de l'utilisation desquels la force, et éventuellement le guidage, sont engendrés extérieurement au dispositif. Tel est le cas, par exemple, pour un dispositif portable manipulé par un opérateur et appliqué sur une surface par ledit opérateur. La tension du câble et donc l'effort exercé par les coulisseaux dépend de la force avec laquelle le dispositif est appliqué contre la surface. Le dispositif garantit que, même si l'effort qui est appliqué sur la structure 1 est désaxé par rapport aux coulisseaux, les efforts exercés sur la surface par les coulisseaux seront identiques l'un à l'autre.

Selon un deuxième agencement, la deuxième extrémité du câble est liée à un arbre de sortie d'un actionneur.

Ainsi, la tension peut être réglée au moyen de l'actionneur de sorte que le dispositif est actif.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :
- les figures 1a, 1b, 1c sont des vues schématiques d'un dispositif selon un premier mode de réalisation de l'invention, respectivement dans une phase d'approche de la surface, une phase de contact en un point de la surface et une phase de contact en deux points de la surface ;
- les figures 2a, 2b sont des vues schématiques du dispositif selon le premier mode de réalisation de l'invention, respectivement pour deux positions des coulisseaux ;
- la figure 3 est une vue schématique d'un dispositif selon un deuxième mode de réalisation ;
- la figure 4 est une vue schématique d'un dispositif selon un troisième mode de réalisation ;
- la figure 5 est une vue schématique d'un dispositif selon un quatrième mode de réalisation ;
- la figure 6 est une vue en perspective d'un dispositif selon un cinquième mode de réalisation ;
- la figure 7 est une vue schématique de face d'un dispositif selon un sixième mode de réalisation.

### DESCRIPTION DETAILLEE DE L'INVENTION

Le dispositif selon les quatre premiers modes de réalisation est une application de l'invention à un dispositif d'appui sur une ou plusieurs pièces P ayant une surface extérieure S pouvant être non plane.

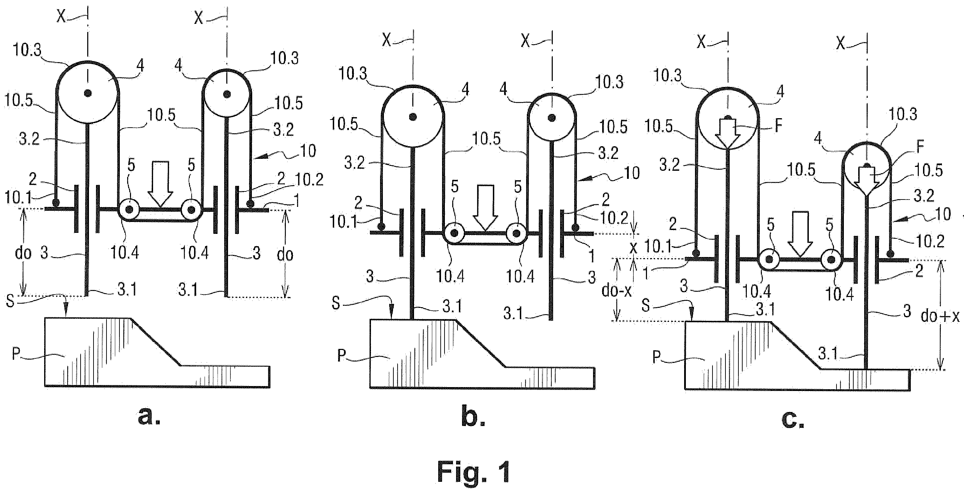

En référence aux figures 1a à 1c, le dispositif selon le premier mode de réalisation comprend une structure 1, plus particulièrement un bâti mobile, pourvue de deux paliers 2 dans chacun desquels un coulisseau 3 est monté pour coulisser selon une direction de coulissement X entre deux positions extrêmes, à savoir une position extrême rentrée et une position extrême sortie. Les coulisseaux 3 sont ici verticaux, donc parallèles l'un à l'autre, et ont une extrémité distale 3.1 formant une extrémité d'appui sur la surface S et une extrémité proximale sur laquelle est montée une poulie 4. Un organe de rappel élastique, non représenté, ici un ressort hélicoïdal, s'étend entre la structure 1 et un épaulement du coulisseau 3 pour repousser le coulisseau 3 vers sa position rentrée extrême. Dans une position moyenne, les coulisseaux ont une longueur sortie d0 en saillie sous la structure.

Le dispositif comprend un câble, généralement désigné en 10, ayant une première extrémité 10.1 et une deuxième extrémité 10.2 qui sont fixées à la structure 1. Entre ces deux extrémités, le câble 10 comprend :
- des premières portions 10.3 en appui sur les poulies 4 montées pivotantes sur les coulisseaux 3,
- des deuxièmes portions 10.4 en appui contre des poulies de renvoi 5 pivotantes formant des parties solidaires de la structure 1 (en ce sens qu'elles sont mobiles avec la structure 1 au moins selon la direction de coulissement),
- entre chaque première portion 10.3 et la deuxième portion 10.4 adjacente, un brin 10.5 s'étendant parallèlement à la direction de coulissement X du coulisseau 3 correspondant.

Sur la figure 1a, le dispositif est en face de la surface S d'une pièce P. L'un des coulisseaux 3, ici celui de gauche, fait face à une portion de surface S qui est surélevée d'une hauteur x par rapport à une portion voisine de la surface S faisant face à l'autre des coulisseaux 3, à savoir celui de droite.

A la figure 1b, la structure 1 a été rapprochée vers la pièce P : le coulisseau 3 de gauche touche la surface S alors que le coulisseau 3 de droite n'est en contact avec aucune portion de la surface S.

Si le mouvement de rapprochement se poursuit d'une distance x, le coulisseau 3 de gauche va coulisser vers le haut et exercer une tension dans le câble 10 qui va provoquer un coulissement vers le bas du coulisseau 3 de droite jusqu'à ce que la longueur sortie du coulisseau 3 de gauche soit égale à d0-x et la longueur sortie du coulisseau 3 de droite soit égale à d0+x (figure 1c). On comprend que l'effort vers la pièce exercé sur la structure 1 engendre une tension dans le câble 10 telle que chaque brin 10.5 du câble 10 est soumis à une tension T. Le câble 10 exerce donc sur les coulisseaux 3 des efforts identiques, ici symbolisés par les flèches F, quelle que soit la position des coulisseaux entre leurs deux positions extrêmes. Plus précisément, le câble 10 exerce sur chaque coulisseau 3 une force colinéaire à la direction de coulissement et égale à deux fois la tension T (chaque brin 10.5 exerçant, sur le coulisseau 3 qui lui est associé, une force vers la pièce P égale à la tension T) . Chaque coulisseau 3 exerce ainsi sur la surface S une force colinéaire à la direction de coulissement et égale à deux fois la tension T. Les forces exercées par les coulisseaux 3 sont identiques l'une à l'autre, nonobstant les différences de hauteur de la surface S ou l'orientation de la structure 1 par rapport à la surface S, et directement proportionnelles à la tension du câble 10 engendrée par l'effort appliqué sur la structure 1.

On comprend que, quelle que soit la façon dont il est engendré, le mouvement de rapprochement relatif de la pièce P et du dispositif créera des efforts s'opposant à ce rapprochement qui seront égaux pour tous les points de contacts.

La structure 1 peut être mobile manuellement par un opérateur (il s'agit alors d'un bâti portable ou monté sur des glissières ou à l'extrémité d'un bras) de sorte que l'effort appliqué sur la structure 1 est appliqué directement par l'opérateur.

La structure 1 peut également être portée par un chariot motorisé ou un bras de robot de sorte que l'effort appliqué sur la structure 1 est appliqué par la motorisation du chariot ou du bras.

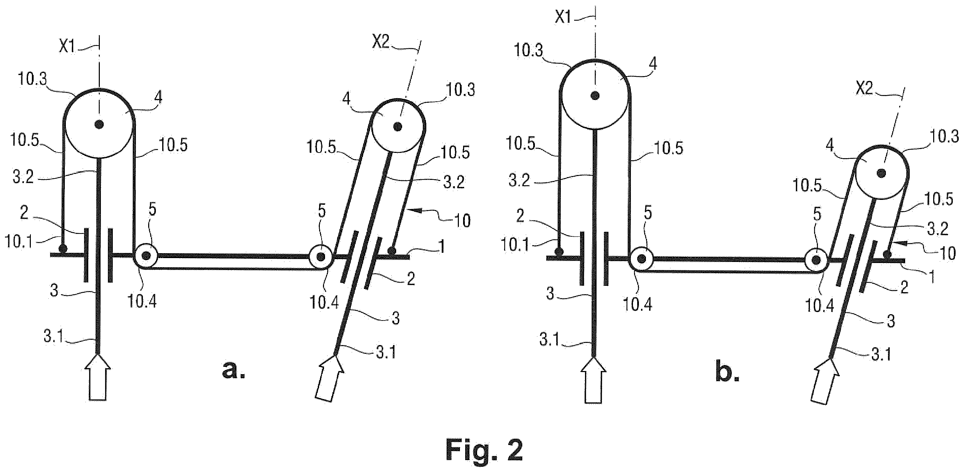

Le dispositif selon la variante des figures 2a et 2b est en tous points identique au dispositif des figures 1a à 1c sauf en ce que les coulisseaux 3 ont des directions de coulissement X1, X2 différentes.

Le fonctionnement est identique à celui du premier mode de réalisation des figures 1a à 1c : le coulissement, dans un sens, de l'un des coulisseaux 3 entraîne un coulissement, dans l'autre sens, de l'autre des coulisseaux 3 tant que les deux coulisseaux 3 ne sont pas en contact avec la surface S.

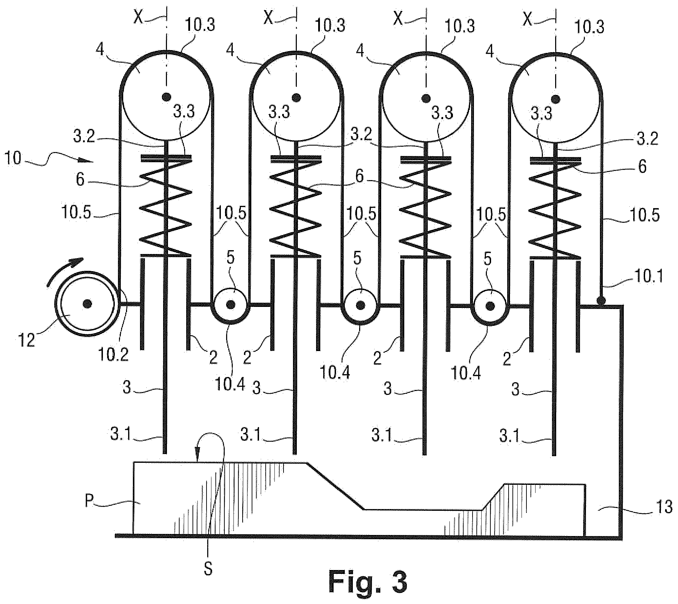

Les éléments identiques ou analogues à ceux précédemment décrits porteront les mêmes références numériques que ceux-ci dans la description qui suit des autres modes de réalisation en relation avec les figures 3 à 6.

En référence à la figure 3, le dispositif selon le deuxième mode de réalisation comprend, comme précédemment, une structure 1, plus particulièrement un bâti, pourvue de paliers 2, ici quatre, dans chacun desquels un coulisseau 3 est monté pour coulisser selon une direction de coulissement X, ici verticale, entre deux positions extrêmes. Les coulisseaux 3 ont une extrémité distale 3.1 formant une extrémité d'appui sur la surface S et une extrémité proximale sur laquelle est montée une poulie 4. Un organe de rappel élastique 6, ici un ressort hélicoïdal, s'étend entre la structure 1 et un épaulement 3.3 de chaque coulisseau 3 pour repousser le coulisseau 3 vers sa position extrême supérieure.

Le dispositif comprend un câble, généralement désigné en 10, ayant des extrémités 10.1, 10.2 entre lesquelles le câble 10 comprend :
- des premières portions 10.3 en appui sur les poulies 4 montées pivotantes sur les coulisseaux 3,
- des deuxièmes portions 10.4 en appui contre des poulies de renvoi 5 pivotantes formant des parties solidaires de la structure 1,
- entre chaque première portion 10.3 et la deuxième portion 10.4 adjacente, un brin 10.5 s'étendant parallèlement à la direction de coulissement X du coulisseau 3 correspondant.

La première extrémité 10.1 du câble 10 est comme précédemment fixée à la structure 1. La deuxième extrémité 10.2 est liée à un arbre de sortie d'un actionneur qui est ici un moteur 12 rotatif. On comprend que l'ensemble des poulies 4, 5 ainsi constitué forme un circuit continu pour le câble 10 qui peut rouler sur les poulies 4, 5 et que l'actionnement du moteur 12 dans un sens ou dans l'autre va provoquer une augmentation ou une réduction de la tension du câble 10 et donc de l'effort exercé par le câble 10 sur les coulisseaux 3.

La structure 1 est fixe et délimite un espace 13 de réception de la pièce P à serrer en regard des extrémités d'appui 3.1 des coulisseaux 3.

En actionnant le moteur 12 pour augmenter la tension du câble 10, on provoque le déplacement des coulisseaux 3 vers la surface S de la pièce P. Si l'un des coulisseaux 3 touche la surface S avant l'autre, il va, rester bloqué par la surface S qui s'oppose à son déplacement, ce qui va provoquer le coulissement des autres coulisseaux 3 dans l'autre sens pour augmenter leur longueur en saillie sous la structure 1 jusqu'à ce que tous les coulisseaux 3 soient en contact avec la surface S. Lorsque tous les coulisseaux 3 sont en contact avec la surface S, les forces exercées par les coulisseaux 3 sur la surface S sont identiques, nonobstant les différences de hauteur de la surface S, et directement proportionnelles à la tension du câble 10.

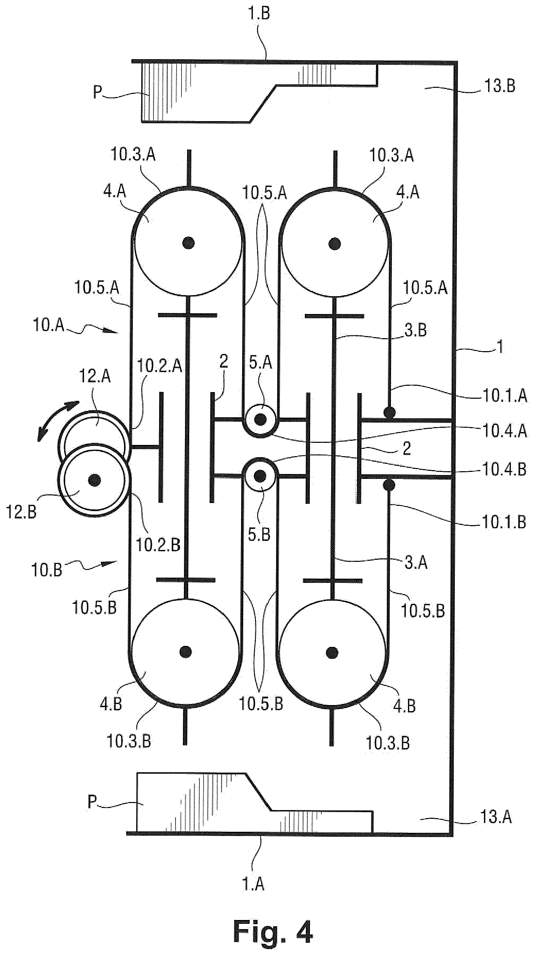

Dans le dispositif selon le troisième mode de réalisation représenté la figure 4, la structure 1 comprend une âme centrale s'étendant entre deux ailes 1.A, 1.B parallèles à l'âme et définissant chacune avec l'âme un espace 1.A, 1.B de réception d'une pièce P. L'âme est traversée par des paliers 2, ici au nombre de deux, dans chacun desquels est monté pour coulisser un coulisseau 3. Chaque coulisseau 3 a un tronçon 3.A en saillie de l'âme dans l'espace de réception 13.A et un tronçon 3.B en saillie de l'âme dans l'espace de réception 13.B. Le tronçon 3.A est pourvu d'une poulie 4.B et le tronçon 3.B est pourvu d'une poulie 4.A.

Le dispositif comprend deux câbles 10.A, 10.B ayant respectivement une extrémité 10.1.A, 10.1.B fixée à l'âme et une extrémité 10.2.A, 10.2.B reliée à l'arbre de sortie d'un moteur 12 entraînant deux poulies 12.A, 12.B sur laquelle les câbles 10.A, 10.B sont enroulés en sens inverses. Entre ces extrémités, chaque câble 10.A, 10.B comprend respectivement :
- des premières portions 10.3.A, 10.3.B en appui sur les poulies 4.A, 4.B,
- des deuxièmes portions 10.4.A, 10.4.B en appui contre des poulies de renvoi 5.A, 5.B pivotantes formant des parties solidaires de l'âme de la structure 1,
- entre chaque première portion 10.3.A, 10.3.B et la deuxième portion 10.4.A, 10.4.B adjacente, un brin 10.5.A, 10.5.B s'étendant parallèlement à la direction de coulissement X du coulisseau 3 correspondant.

On comprend que l'actionnement du moteur 12 va provoquer :
- dans un premier sens, une augmentation de la tension du câble 10.A et une réduction de la tension du câble 10.B, et donc un déplacement des coulisseaux 3 vers la pièce P se trouvant dans l'espace 13.A ;
- dans un deuxième sens, une réduction de la tension du câble 10.A et une augmentation de la tension du câble 10.B, et donc un déplacement des coulisseaux 3 vers la pièce P se trouvant dans l'espace 13.B.

Les câbles 10.A, 10.B sont ainsi montés sur les coulisseaux 3 et la structure 1 de manière symétriquement inversée pour exercer sur les coulisseaux 3 des efforts opposés.

Le fonctionnement est pour le reste identique à celui du deuxième mode de réalisation.

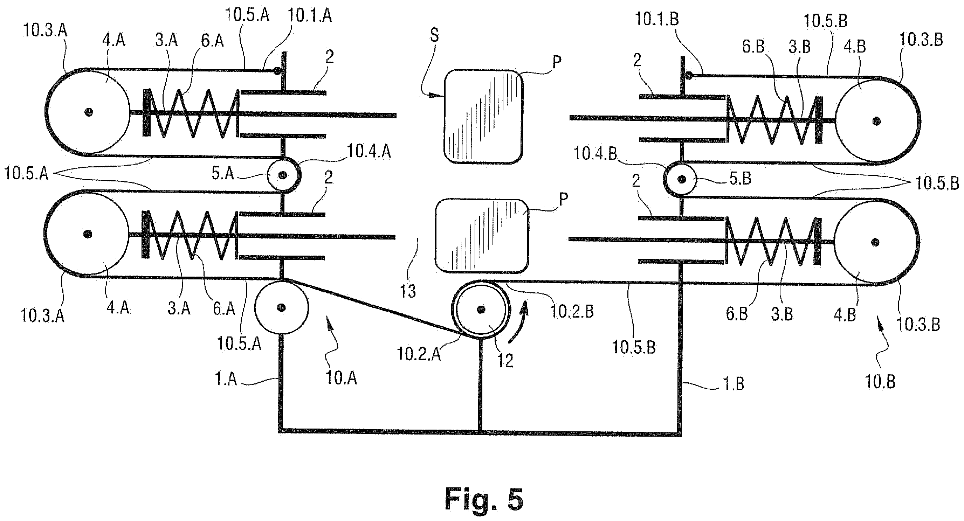

Le dispositif selon le quatrième mode de réalisation représenté la figure 5 est un dispositif analogue à celui du deuxième mode de réalisation mais dédoublé.

Dans ce quatrième mode de réalisation, la structure 1 comporte deux ailes 1.A, 1.B délimitant entre elles un espace 13 de réception d'une pièce P.

Chaque aile 1.A, 1.B porte une paire de coulisseaux 3.A, 3.B respectivement. Chaque paire de coulisseaux 3.A, 3.B est associée à un câble 10.A, 10.B respectivement. L'agencement de chaque paire de coulisseaux 3.A, 3.B et du câble 10.A, 10.B est identique à celui du dispositif selon le deuxième mode de réalisation.

Le moteur 12 se trouve entre les deux ailes 1.A, 1.B. Les deuxièmes extrémités 10.2.A, 10.2.B sont fixées à la poulie solidaire de l'arbre de sortie du moteur 12 mais de telle manière que les câbles 10.A, 10. B s'enroulent sur la poulie dans des sens opposés.

En actionnant le moteur 12 dans un sens ou dans l'autre, on augmente ou on réduit la tension des câbles 10.A, 10.B. Les tensions des câbles 10.A, 10.B sont toujours identiques l'une à l'autre. En actionnant le moteur 12 pour augmenter la tension du câble 10.A, 10.B, on provoque le déplacement des coulisseaux 3.A, 3.B vers la surface S de la pièce P. Lorsque tous les coulisseaux 3.A, 3.B sont en contact avec la surface S, les forces exercées par les coulisseaux 3.A, 3.B sont identiques, nonobstant les différences d'épaisseur de la pièce P, et directement proportionnelles à la tension des câbles 10.A, 10.B.

Ainsi, les deux coulisseaux 3.A forment un premier mors d'une pince et les deux coulisseaux 3.B forment un deuxième mors de cette pince. Les coulisseaux 3.A du premier mors sont colinéaires aux coulisseaux 3.B du deuxième mors.

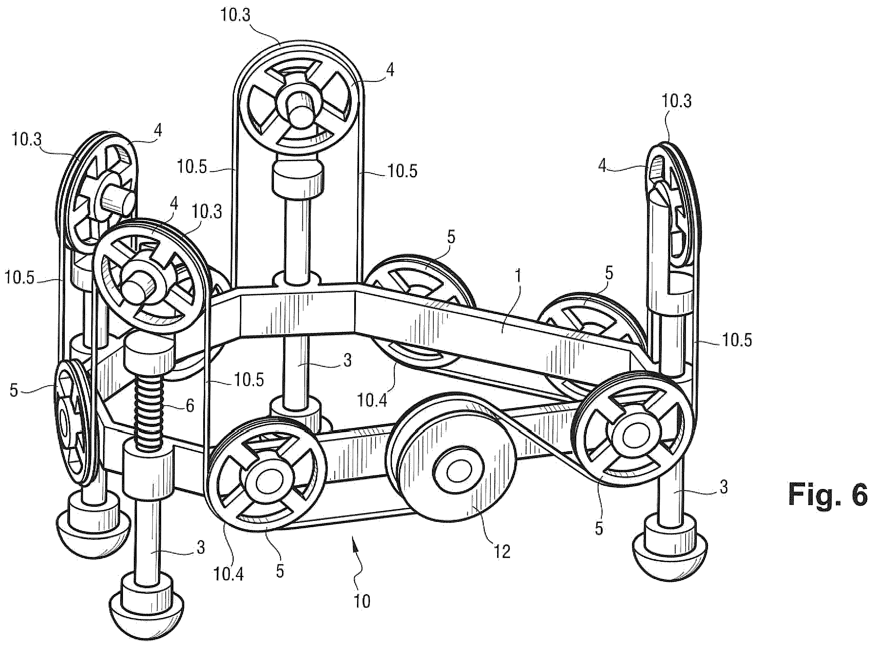

Le dispositif selon le cinquième mode de réalisation, représenté à la figure 6, est analogue à celui représenté à la figure 3 sauf en ce que la structure 1 a la forme d'un cadre fermé. Les points d'appui des coulisseaux 3 ne sont donc pas sur une ligne droite comme dans le deuxième mode de réalisation mais sur une boucle fermée.

Le fonctionnement de ce dispositif est identique à celui du dispositif selon le deuxième mode de réalisation.

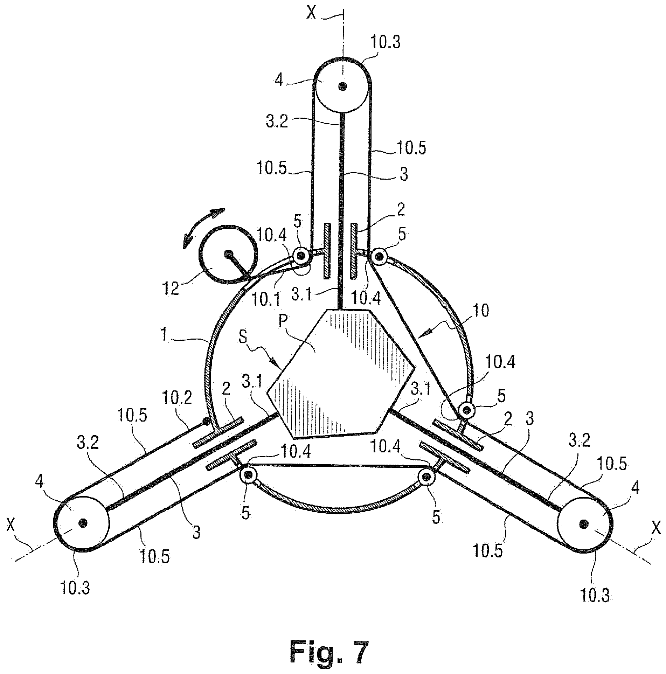

Le dispositif selon le sixième mode de réalisation, représenté à la figure 7, est analogue à celui représenté à la figure 5 sauf en ce que la structure 1 a la forme d'un cercle fermé. Les coulisseaux 3 s'étendent radialement par rapport à la structure 1, à 120° les uns par rapport aux autres. Les extrémités 3.1 des coulisseaux 3 sont à l'intérieur du cercle formé par la structure 1 et les extrémités 3.2 portant les poulies 4 sont à points d'appui des coulisseaux 3 ne sont à l'extérieur du cercle formé par la structure 1.

Comme précédemment, un moteur 12 tire sur une extrémité 10.1 d'un câble dont l'extrémité opposée 10.2 est fixée à la structure 1 et qui possède des tronçons 10.3, 10.4 passant sur les poulies 4 et sur des poulies 5 pour avoir tronçons 10.5 parallèles aux directions de coulissement des coulisseaux 3 (à savoir chaque coulisseau 3 a une direction de coulissement radiale à 120° des directions de coulissement des deux autres coulisseaux).

Le fonctionnement de ce dispositif est identique à celui du dispositif selon le deuxième mode de réalisation et forme ainsi un mandrin de serrage d'une pièce P reçue dans le cercle formé par la structure 1.

Quand il y a trois coulisseaux dans le plan, leur positionnement à 120° assure l'équilibre des forces. En variante, il peut y avoir un nombre différent de coulisseaux et par exemple plus de trois coulisseaux. Dans ce cas, les coulisseaux sont positionnés en tenant compte des points d'application souhaités des efforts, de la forme des pièces, du nombre de coulisseaux...

Bien entendu, l'invention n'est pas limitée aux modes de réalisation décrits mais englobe toute variante entrant dans le champ de l'invention telle que définie par les revendications.

En particulier, au moins l'un des coulisseaux peut être monté sur un palier relié à la structure par une rotule pour être inclinable par rapport à la structure 1 et s'adapter à la forme de la surface S.

Les poulies 4 et/ ou les poulies de renvoi 5 peuvent avoir des diamètres différents ou être remplacées par des portions arrondies en un matériau à faible coefficient de frottement.

Le nombre de coulisseaux peut être quelconque : ainsi le dispositif peut comprendre 2N coulisseaux, dont N associés au premier câble et formant un premier mors et N associés à un deuxième câble et formant un deuxième mors.

Bien que le dispositif ait été décrit dans une configuration où les coulisseaux s'étendent dans des plans verticaux, toute autre orientation est envisageable et par exemple une orientation des coulisseaux dans un plan horizontal. Les coulisseaux peuvent aussi s'étendre dans des plans différents.

Le câble peut avoir une structure multifilamentaire toronnée ou être d'une seule pièce ; il peut avoir une section circulaire ou être formé d'un tronçon de courroie de section rectangulaire ou autre ; il peut être en métal ou en tout autre matériau adapté.

La forme de la structure 1 n'est ni nécessairement fermée (quoique ça soit préférable mécaniquement parlant dans de nombreuses applications) ni obligatoirement circulaire comme dans le sixième mode de réalisation. Il suffit qu'elle positionne les coulisseaux correctement. Ainsi, la structure 1 peut avoir une forme sphérique, cylindrique, parallélépipédique ou autre.

## Revendications

1. Dispositif d'application d'effort sur une surface, comprenant une structure, au moins deux coulisseaux qui ont chacun une extrémité d'appui sur la surface et qui sont montés sur la structure pour coulisser entre deux positions extrêmes, et au moins un premier câble ayant, entre une première extrémité et une deuxième extrémité liées à la structure :
- des premières portions en appui sur les coulisseaux,
- des deuxièmes portions en appui contre des parties solidaires de la structure,
**caractérisé en ce que** ledit au moins un premier câble a, entre chaque première portion et la deuxième portion adjacente, un brin s'étendant parallèlement à la direction de coulissement du coulisseau correspondant de telle manière que le premier câble exerce sur les coulisseaux des efforts identiques quelle que soit la position des coulisseaux entre leur deux positions extrêmes, quand les coulisseaux sont immobilisés par un contact avec la surface.

2. Dispositif selon la revendication 1, dans lequel l'une des deuxièmes portions est formée par la première extrémité du câble qui est fixée à la structure.

3. Dispositif selon la revendication 2, dans lequel deux des deuxièmes portions sont formées par la première extrémité du câble et la deuxième extrémité du câble qui sont fixées à la structure.

4. Dispositif selon la revendication 1 ou la revendication 2, dans lequel la deuxième extrémité du câble est liée à un arbre de sortie d'un actionneur.

5. Dispositif selon la revendication 4, dans lequel l'actionneur est un moteur rotatif.

6. Dispositif selon l'une quelconque des revendications précédentes, dans lequel au moins une des parties solidaires de la structure est une poulie de renvoi.

7. Dispositif selon l'une quelconque des revendications précédentes, dans lequel au moins l'un des coulisseaux est pourvu d'une poulie de renvoi contre laquelle la première portion correspondante du câble est en appui.

8. Dispositif selon l'une quelconque des revendications précédentes, dans laquelle les coulisseaux ont des directions de coulissement différentes.

9. Dispositif selon l'une quelconque des revendications précédentes, comprenant un deuxième câble monté sur les coulisseaux et la structure de manière symétriquement inversée pour exercer sur les coulisseaux des efforts opposés à ceux exercés par le premier câble.

10. Dispositif selon l'une quelconque des revendications précédentes, dans lequel les deux coulisseaux forment un premier mors d'une pince ayant un deuxième mors en regard des extrémités d'appui des coulisseaux.

11. Dispositif selon la revendication 10, comprenant 2N coulisseaux, dont N associés au premier câble et formant un premier mors et N associés à un deuxième câble et formant un deuxième mors.

12. Dispositif selon la revendication 11, dans lequel les coulisseaux du premier mors sont colinéaires aux coulisseaux du deuxième mors.
